# EUROPEAN PATENT SPECIFICATION

(11) **EP 3 258 788 B1**
(45) Date of publication and mention of the grant of the patent: **05.08.2020**
(21) Application number: 16715876.5
(22) Date of filing: 19.02.2016
(51) Int. Cl.: A21C 15/00, A21D 13/00, A21D 13/33

(54) **APPARATUS AND METHOD FOR THE PRODUCTION AND FILLING OF FILLED BAKED PRODUCTS MADE WITH BATTER DOUGH**
VORRICHTUNG UND VERFAHREN ZUM HERSTELLEN UND FÜLLEN VON GEFÜLLTEN BACKWAREN AUS BACKTEIG
APPAREIL ET PROCÉDÉ DE PRODUCTION ET DE FOURRAGE DE PRODUITS DE BOULANGERIE FOURRÉS RÉALISÉS À PARTIR D'UNE PÂTE LIQUIDE

(30) Priority: 20.02.2015 IT UD20150021
(43) Date of publication of application: 27.12.2017
(73) Proprietor: ALIMEC S.R.L., 36030 Valli del Pasubio (VI) (IT)
(72) Inventor: ROSO, Urbano, 36015 Schio (IT)
(74) Representative: Petraz, Davide Luigi
(86) International application number: PCT/IB2016/050902
(87) International publication number: WO 2016/132326

(56) References cited:
- EP-A1- 0 997 069
- GB-A- 1 379 407
- US-A- 3 871 274
- US-A1- 2005 087 079

## Description

### FIELD OF THE INVENTION

Embodiments described here concern an apparatus and a method for the production of filled or stuffed baked products made with batter dough.

### BACKGROUND OF THE INVENTION

It is known to produce baked products made with batter dough, filled or stuffed with custard, jam, chocolate, cream or other type of filling, obtaining a dough that is poured into hollows in suitable baking trays, which are introduced into the oven for cooking. In particular, some baked products provide to use so-called ramekins, housed in the hollows, while others are poured directly into the hollows of the baking trays. To facilitate the detachment of the baked products after cooking, in this latter case, it is initially provided to oil the trays and subsequently to pour the dough into the ready-oiled hollows. After this, the products are cooked, and at the end the trays are removed from the oven and the cooked baked products are cooled.

This cooling is important, in order to take the baked products to a temperature that will not damage the filling, which is injected into them later in order to fill them. Typically, the filling is a heat-sensitive product, i.e. a product with organoleptic properties that can be damaged by too high a temperature. For example, the filling can be a cream formed by a water/oil emulsion which, at the temperatures at which the product finds itself when it has just come out of the oven, risks breaking and therefore ruining the quality of the product. Therefore, filling is carried out only when a suitable temperature has been reached. Filling provides to introduce the filling inside the baked products still contained in the hollows of the trays. This operation is called "vertical filling" and is generally done from above, by means of a vertical injection system of the filling, typically using injection needles that are lowered from above, holing the upper or flat surface of the baked products in one or more points. This operation can cause unwanted accumulations of filling and also the injection holes are very visible and marked, thus giving, overall, a not very "clean" or appealing appearance to the baked product. This therefore, disadvantageously, gives an upper surface that is not esthetically appreciated by the consumer. Furthermore, since the filling is introduced at different points, i.e. discontinuously, it is not distributed homogeneously and uniformly inside the baked product.

After the filling operation, the trays are typically turned over, so that the baked products become detached, and are distributed on a carrier belt, upside down, with the bottom facing upward and the flat part, which has the filling holes, facing downward in contact with the belt. This causes the disadvantage that the filling present in correspondence with the introduction points can dirty the carrier belt, with all the disadvantages that this entails in terms of downtimes of the machine for cleaning the carrier belt.

At this point, it may be necessary to turn the baked products over again, so that their upper or flat surface again faces upward, for example for the purpose of distributing a garnish or covering on said upper surface. Downstream of these operations, it may be provided to subject the baked products to a treatment against micro-organisms, for example by exposure to UV light to eliminate spores, after which the baked products can be packaged.

Document GB-A-1.379.407 describes a method for filling hollow waffles, which are open on at least one side, in particular wafer shells. The method provides a horizontal injection of a filling, which is solid at normal room temperature but which is super-cooled to a temperature from 1°C to 8°C, preferably from 3°C to 5°C, below the temperature of normal solidification at normal pressure, so that it becomes a paste or liquid. The filling is injected using one or more nozzles inside the hollow waffle bodies that are disposed lying horizontal. After it has been emitted from the nozzle and injected into the cavity of the hollow waffle body, the super-cooled filling solidifies instantly. The hollow waffle bodies are fed along two parallel rows, disposed and positioned stably and singly one by one in conveyor plates moved by a transport chain in a direction of feed. The hollow waffle bodies are oriented with their main direction of development transverse to the direction of feed. The transport chain moves the hollow waffle bodies in front of the hole of the nozzles, but transverse to the axis of the nozzles. Therefore, the nozzles are disposed at the side of the direction of feed and of the hollow waffle bodies advancing in two rows, and they inject the filling transversely to the direction of feed. One possible disadvantage of this known solution is that, when there are more than two advancing rows, it is not possible to fill the central rows, which cannot be reached by the injection nozzles disposed at the sides. Another possible disadvantage is that this solution can be impractical in the case of baked products advancing free to move, i.e. not kept in a stable position by conveyor discs or analogous housing or positioning seatings, since the filling action of the injection nozzles can cause a transverse movement with respect to the direction of feed, dis-aligning the baked products and hence causing a disorderly flow, difficult to manage.

Other limitations and disadvantages of conventional solutions and technologies will be clear to a person of skill after reading the remaining part of the present description with reference to the drawings and the description of the embodiments that follow, although it is clear that the description of the state of the art connected to the present description must not be considered an admission that what is described here is already known from the state of the prior art.

There is therefore a need to perfect an apparatus and method for the production and filling of filled baked products made with batter dough which can overcome at least one of the disadvantages of the state of the art.

In particular, one purpose of the present invention is to obtain an apparatus and a corresponding method that allows to produce filled baked products made with batter dough with an outer appearance that is "clean" and appealing, without injection holes that are too visible or accumulations of filling in the zones most exposed to the consumer's sight. Another purpose is to make the filling distributed as homogeneously and uniformly as possible inside the baked products.

Another purpose of the present invention is to obtain an apparatus and method that can avoid dirtying the carrier belt of the baked products with filling, thus reducing the machine downtimes due to this.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with some embodiments, an apparatus is provided for the production and filling of filled baked products made with batter dough. According to one embodiment the apparatus comprises:
- a transport device configured to define a movement plane for the movement, in a direction of feed, of baked products or one or more baking trays each provided with cooking hollows to receive a measured quantity of batter dough;
- a unit to deliver and measure the batter dough configured to deliver a batter dough into the hollows of the baking trays;
- a first cooling sector configured to cool the baked products contained in the hollows of the baking trays;
- a product extraction unit configured to remove the cooked baked products from the baking trays and deposit them in organized rows on the transport device;
- a cooling unit configured to carry out a second cooling of the baked products removed from the baking trays;
- a horizontal filling unit configured to introduce a filling inside the cooled baked products, essentially acting parallel to the movement plane.

According to the invention, the first cooling sector is an in-air cooling sector.

According to a possible embodiment, the first cooling sector can be disposed upstream of the product extraction unit in the direction of feed.

Another possible variant provides that the first cooling sector is disposed downstream of a cooking device in the direction of feed.

According to a variant, the first cooling sector can be configured to cool the baked products to about 55°-65°.

According to another variant, the first cooling sector is configured to cool the baked products within about four to six minutes.

According to the invention, the cooling unit is a forced cooling unit and comprises a refrigerator.

In accordance with yet another possible embodiment, the cooling unit is configured to carry out the second cooling of the baked products to about 25°-35°.

In accordance with a variant, the horizontal filling unit includes a filling device with horizontal needles.

In accordance with another variant, the filling device with horizontal needles comprises a plurality of filling heads, each provided with a horizontal injection needle, disposed aligned parallel to the direction of feed.

In accordance with other embodiments, a method is provided to produce and fill filled baked products made with a batter dough. According to one embodiment the method comprises:
- moving baking trays on a movement plane in a direction of feed, each provided with cooking hollows to receive a measured quantity of batter dough;
- delivering a batter dough into the hollows of the baking trays;
- cooking the batter dough contained in the hollows of the baking trays;
- cooling for a first time the baked products contained in the hollows of the baking trays;
- removing the cooked baked products from the baking trays and subjecting them to the first cooling and depositing them in organized rows on a transport device;
- moving the baked products removed from the baking trays on the movement plane in the direction of feed;
- cooling the baked products a second time;
- a horizontal filling step that provides to introduce a filling inside the cooled baked products, acting essentially parallel to the movement plane.

In accordance with a possible variant, the first cooling is carried out in air.

According to another variant, the first cooling can be carried out before the removal of the cooked baked products from the baking trays.

In accordance with a possible embodiment, the first cooling is carried out immediately after the cooking of the batter dough in the hollows of the baking trays.

In accordance with another embodiment, the first cooling can cool the baked products to about 55°-65°.

According to another possible variant, the first cooling can cool the baked products within about four to six minutes.

According to the invention, the second cooling is a forced cooling by means of a refrigerator.

According to another embodiment the second cooling can cool the baked products to about 25°-35° C.

According to yet another embodiment, the horizontal filling can be carried out in an essentially parallel direction to the direction of feed.

These and other aspects, characteristics and advantages of the present disclosure will be better understood with reference to the following description, drawings and attached claims. The drawings, which are integrated and form part of the present description, show some forms of embodiment of the present invention, and together with the description, are intended to describe the principles of the disclosure.

The various aspects and characteristics described in the present description can be applied individually where possible. These individual aspects, for example aspects and characteristics described in the attached dependent claims, can be the object of divisional applications.

It is understood that any aspect or characteristic that is discovered, during the patenting process, to be already known, shall not be claimed and shall be the object of a disclaimer.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a block diagram of an apparatus for the production of filled baked products made with batter dough, in accordance with embodiments described here;
- fig. 2 is a block diagram of an apparatus for the production of filled baked products made with batter dough in accordance with other embodiments described here;
- figs. 3-5 are schematic views from above of operating conditions of a part of an apparatus for the production of filled baked products made with batter dough, in accordance with embodiments described here;
- fig. 6 is a schematic view of a part of an apparatus for the production of filled baked products made with batter dough, in accordance with embodiments described here;
- fig. 7 is a schematic representation of a part of an apparatus for the production of filled baked products made with batter dough in an operating condition, in accordance with embodiments described here;
- fig. 8 is a schematic representation of a part of an apparatus for the production of filled baked products made with batter dough in another operating condition, in accordance with embodiments described here.

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF SOME EMBODIMENTS

We shall now refer in detail to the various forms of embodiment of the present invention, of which one or more examples are shown in the attached drawing. Each example is supplied by way of illustration of the invention and shall not be understood as a limitation thereof.

Before describing these embodiments, we must also clarify that the present description is not limited in its application to details of the construction and disposition of the components as described in the following description using the attached drawings. We must also clarify that the phraseology and terminology used here is for the purposes of description only, and cannot be considered as limitative. The use of terms such as "including", "comprising", "having" and their variations is intended to include the elements listed after them and their equivalents, and also additional elements. Unless otherwise specified, terms such as "mounted", "connected", "supported" and "coupled" and their variations are used in the widest sense and include both direct and indirect assemblies, connections, supports and couplings. Furthermore, the terms "connected" and "coupled" are not limited to physical or mechanical connections or couplings.

We must point out here that by the expression "baked product" we mean a food obtained by cooking and possible leavening of doughs wherein the main ingredients are flour and water, and that can also contain salt and/or a raising agent, as well as other additional ingredients such as sugar, oil, fats, creams, jams and marmalade.

A baked product of the type adopted in the embodiment described here can be a product chosen from the group consisting of: leavened baked products, baked products with a batter dough, filled baked products, coated baked products and a combination of these, for example leavened baked products with a batter dough, possibly filled and/or coated. For example, among those baked products there may be plum-cakes, doughnuts, small cakes, sliced cakes, muffins, madeleines, croissants, cannoli, eclairs. Therefore, some embodiments described here can be adopted, for example, in lines or plants to produce filled baked products, coated baked products, filled and coated baked products of the type discussed here. It is understood that a filled baked product is a product which has a filling inside it, such as one or more types of creams, chocolate, icing, or one or more jams or marmalade. By a coated product we mean a baked product that is provided externally with a coating, decoration or topping, such as one or more creams, chocolate, icing, one or more jams, marmalade, syrups, sugar, icing sugar, pip sugar, chocolate flakes, dried fruit or a combination of these elements, for example with a nutritional function and possibly also an esthetic one.

A baked product of the type used in the embodiment described here can have an upper surface and a lower surface, generally opposite each other. Generally, and without constituting a limitation for any embodiment, at least one surface, upper or lower, of the baked product, or both the upper and lower surface of the baked product can typically be flat. By the expression "flat surface" in this context we mean a surface substantially not inclined, substantially smooth and uniform. In particular, an upper flat surface and a lower flat surface of the baked products usable in the embodiments described here can respectively define a stable upper support base and a stable lower support base of the baked product. Typically, a baked product of the type discussed here is provided with an upper surface and a lower surface as expressed above, it can have an essentially parallelepiped shape with a polygonal base, for example, quadrangular, such as rectangular or square, or a cylindrical shape, in particular discoidal, or a ring shape.

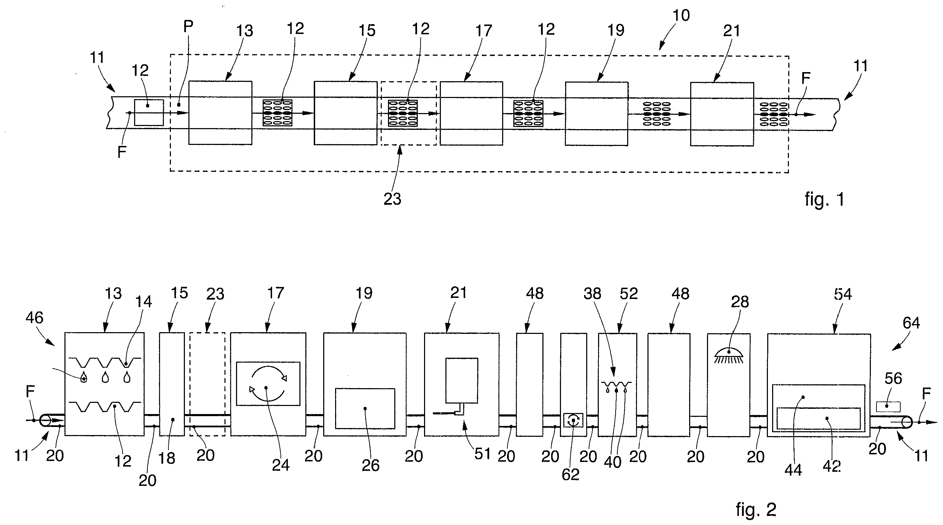

In accordance with embodiments described using fig. 1, and combinable with all the embodiments described here, an apparatus 10 is provided for the production and filling of baked products with a batter dough that includes at least:
- a transport device 11 configured to define a movement plane P for the movement, in a direction of feed F, of baked products 22 or one or more baking trays 12 each provided with cooking hollows or wells to receive a measured quantity of batter dough;
- a unit to deliver and measure the batter dough 13 configured to deliver a batter dough into the hollows of the baking trays 12 made to move by the transport device 11;
- a first cooling sector 23 configured to cool the baked products 22 contained in the hollows of the baking trays 12;
- a product extraction unit 17 configured to remove the cooked baked products 22 from the baking trays 12 and subject them to the first cooling and deposit them in organized rows on the transport device 11;
- a cooling unit 19 configured to carry out a second cooling of the baked products 22 removed from the baking trays 12;
- a horizontal filling unit 21 configured to introduce a filling 34 inside the cooled baked products 22, essentially acting parallel to the movement plane P.

The horizontal filling unit 21 is thus provided to make a so-called "long" filling of the baked products no longer contained in the baking trays 12, but removed from them, acting laterally, and not from above, as in traditional filling of baked products of batter dough contained in the baking trays 12, which are usually filled vertically, acting on their upper surface.

In some embodiments, the apparatus 10 can comprise a cooking device 15 configured to receive the baking trays 12 and to cook the batter dough contained therein, disposed between the unit to deliver and measure the batter dough 13 and the product extraction unit 17.

In accordance with other embodiments described using fig. 1, and combinable with all the embodiments described here, a method for the production and filling of filled baked products 22 made of batter dough includes at least:
- moving baking trays 12 on a movement plane P in a direction of feed F, each baking tray being 12 provided with cooking hollows to receive a measured quantity of batter dough;
- delivering a batter dough into the hollows of the baking trays 12;
- cooking the batter dough contained in the hollows of the baking trays 12;
- carrying out a first cooling of the baked products 22 contained in the hollows of the baking trays 12;
- removing the cooked baked products 22 from the baking trays 12 and subjecting them to the first cooling and depositing them in organized rows on the transport device 11;
- moving the baked products 22 removed from the baking trays 12 on the movement plane P in the direction of feed F;
- carrying out a second cooling of the baked products 22;
- a horizontal filling step that provides to introduce a filling 34 inside the cooled baked products 22, acting essentially parallel to the movement plane P.

In accordance with embodiments described using figs. 1 and 2 and combinable with all the embodiments described here, the apparatus 10 can include said first cooling sector 23, configured to cool the cooked baked products 22, before they are removed from the baking trays 12. According to the invention, the first cooling sector 23 is an air cooling sector or in air. According to the invention, the first cooling sector 23 is provided with a "soft" cooling in air, that is, a "natural" or "non-forced" cooling. By the expression cooling in air or by air we mean that the baked products 22, once cooked and exiting from a suitable cooking device or oven, are made to transit toward the product extraction unit 17, in an open zone, in contact with air at room temperature, thus cooling due to the natural heat exchange effect with the air at the surrounding room temperature. This first cooling sector 23 is disposed upstream of the product extraction unit 17 in the direction of feed F.

In possible implementations, the first cooling sector 23 can be configured to carry out a first cooling of the cooked baked products 22 to about 55°C-65°C, in particular for example about 58°C-62°C. A specific example can be about 60°C. In particular, this first cooling can be carried out on cooked baked products 22 whose initial temperature is about 95°C-105°C, for example about 100°C. The first cooling sector 23 can be configured to cool the baked products 22 to the desired temperature in a time of about four to six minutes. This first cooling of the cooked baked products 22 causes them to reach a temperature compatible with the subsequent removal operation thereof from the baking trays 12. In substance, this first cooling promotes the removal of the cooked baked products 22 from the baking trays 12 by means of said product extraction unit 17.

In accordance with embodiments described using fig. 2 and combinable with all the embodiments described here, the apparatus 10 develops in the direction of feed F between a feed zone, or entrance, 46 and an exit zone 64. Though the direction of feed F is shown by way of example in figs. 1 and 2 as a rectilinear direction, it is not excluded that there can be deviations, curves, or angles that can be functional for example to one or more operations provided along the apparatus 10, such as for example the removal of the baked products 22 from the baking trays 12, or the overturning of the baked products 22.

In accordance with embodiments described using fig. 2 and combinable with all the embodiments described here, the transport device 11 can be provided with transport members 20 configured to make the baking trays 12 and/or baked products 22 move in the direction of feed F, defining said movement plane P. In particular, the transport device 11 is configured to make the baking trays 12 and/or the baked products 22 move from the feed zone 46 through all the apparatus 10, as far as the exit zone 64. Examples of transport members 20 are a closed ring transport belt, a mat-type closed ring transport belt, a chain transport device, a band or mesh belt to transport a cooking device 15 inside. Depending on the operating zones of the apparatus 10, specific and suitable transport members 20 can be used, in terms of material, movement, function, to the different operating conditions. The transport device 11 is used to move subsequent groups or arrays of baked products 22, which can be more or less neatly aligned transversely to the direction of feed F along a feed front.

In accordance with embodiments described using figs. 1 and 2 and combinable with all the embodiments described here, the first cooling sector 23 comprises a segment of the transport members 20 in the direction of feed F. In particular, the first cooling sector 23 includes a segment, open and exposed to the air, at the surrounding room temperature, of transport members 20 that goes from the cooking device 15 to the product extraction unit 17. In In accordance with the invention in which the first cooling sector 23 is in air, it essentially provides an open segment exposed to the air of the transport member 20 that goes from the cooking device 15 to the product extraction unit 17. In some embodiments, at least this segment of the transport member 20 present in the first cooling sector 23 is configured with a movement such that the crossing and cooling time in the first cooling sector 23 is about four to six minutes.

In accordance with possible implementations, the baking trays 12 are baking trays with hollows, that is, provided with a plurality of said hollows according to a pattern with a disposition of ordered rows and columns. The baking trays 12 can be holed or solid. In possible implementations, the baking trays 12 can be made of a material or several materials suitable to support high temperatures, which can typically be those used for cooking baked products 22. The materials they are made of can be metal material, metal alloys, plastic material, rubber, silicone or suchlike, as long as they are materials suitable to come into contact with food ("food approved") and not to alter/change during cooking. The baking trays 12 can also be provided with possible covers in a non-stick material, such as Teflon or suchlike, in order to facilitate the removal of the baked products 22.

In accordance with embodiments described using fig. 2 and combinable with all the embodiments described here, the unit to deliver and measure the batter dough 13 can include one or more delivery nozzles 14, configured to measure desired quantities of batter dough into the molds of the baking trays 12. According to possible implementations, delivery nozzles 14 can be provided disposed in a coordinated manner with the disposition pattern of the ordered rows and columns of the baking trays 12. The position of the delivery nozzles 14 can be fixed, or adjustable in order to adapt to possible changes in format or disposition pattern of the molds of the baking trays 12. In other implementations, it is possible to provide that one or more of the delivery nozzles 14 are mobile to serve, on each occasion in succession, the molds of the baking trays 12 to be filled. In accordance with possible implementations, the unit to deliver and measure the batter dough 13 can be configured to measure the batter dough directly onto the cooking device 15, or onto the transport device 11, by means of a suitable measuring head. For example, the measuring head of the unit to deliver and measure the batter dough 13 can be installed astride the cooking device 15 and can be configured to complete an upward-downward and translation movement. The measuring head can be extractable for maintenance and/or washing.

In accordance with embodiments described using figs. 1 and 2 and combinable with all the embodiments described here, the first cooling sector 23 is disposed downstream of the cooking device 15 in the direction of feed F. In particular, the first cooling sector 23 is disposed directly at the exit of the cooking device 15, without providing other intermediate operating units. In accordance with some embodiments, the first cooling sector 23 is disposed between the product extraction unit 17 and the cooking device 15, in the direction of feed F, other working units not being provided between these.

In accordance with embodiments described using fig. 2 and combinable with all the embodiments described here, the cooking device 15 can include a cooking oven 18. Examples of cooking oven 18 are tunnel oven, which can typically be provided with a cooking chamber with a transport band or belt, which can be a steel belt. The tunnel oven 18 can be equipped with a system to draw the transport band or belt, heating elements, steamers, flues for the exit of steam and fumes. The oven 18 can be an oven with an adjustable heat cycle, for example to supply a heating profile with temperature increase ramps combined with heating segments with constant temperatures and possible temperature reduction ramps. In possible implementations the oven 18 can include a radiant heating unit and/or a convective heating unit. In possible implementations, the modalities of transferring the radiant and convective heat can be controlled separately to supply a desired thermal profile, for example temperature against time, during the cooking process, in order to increase the thermal power delivered and to reduce energy consumption. For example, the oven 18 can be configured to operate at a working temperature between 150°C and 220°C, in particular between 175°C and 200°C. In possible implementations, the radiant heating unit can include one or more devices to deliver electromagnetic energy, such as lamps for example to supply radiation at a desired wave length. In possible implementations, the convective heating unit can supply a heating gas (for example air) onto the surface of the product to be cooked. The convective heating unit can include a fluid transfer device, a gas collection chamber and a gas heating unit, for example one or more resistive heating elements.

In accordance with possible implementations, the product extraction unit 17 can include an overturning device 24 (see for example fig. 1), configured to overturn the baking trays 12 by 180°, thus causing the baked products 22 to exit. Or, in other implementations, the product extraction unit 17 can include a removal device, for example using suckers or needles. The removal device can be provided with an upward-downward, translation and possible rotation drive mechanism. In yet other implementations, the product extraction unit 17 can include a "pick and place" removal member, such as a robotized arm.

In accordance with possible implementations, the cooling unit 19 is configured to carry out a second cooling of the baked products 22 that would be too hot to undergo further operations, such as filling or packaging. In particular, the cooling unit 19 is a forced cooling unit, that is, it is configured to carry out a second cooling that is a forced cooling of the baked products 22. The cooling unit 19 is disposed upstream of the horizontal filling unit 21, in particular, after the product extraction unit 17. In some embodiments, the cooling unit 19 is configured to carry out a second cooling of the baked products 22 to about 25°C- 35°C, in particular for example 28°C -32°C. A specific example can be about 30°C. In particular, reference is made to the temperature of the inner core of the baked products 22. This temperature of the inner core of the baked products 22 is important for the quality of the filling operation that is subsequently carried out. The second cooling, which as we said is as a second "forced" cooling, can be carried out on cooked baked products 22 that, having already undergone a first cooling as described above, have a temperature of about 55°C-65°C. According to the invention, the cooling unit 19 includes a refrigerator 26. In other possible implementations not according to the invention, the cooling unit 19 can include a cooling tunnel or a spiral cooler. The cooling unit 19 can cool the baked products 22 to a desired temperature, for example by using cold air. During the forced cooling process, the baked product 22 can reabsorb humidity from the cooling air, if the relative humidity exceeds the point of equilibrium for the desired humidity content of the baked product 22, the reabsorption of the humidity risks softening the baked products 22, making them less appetizing, worsening the consistency, increasing the development of molds and the proliferation of bacteria, reducing the duration of the baked products 22. In this case, it is desirable to dehumidify the cooling air, in order to keep the relative humidity at the point of equilibrium, or at a lower value, preventing the reabsorption of humidity. The use of the refrigerator 26 is preferred over the cooling tunnel, since it in any case performs an efficient forced cooling function and can considerably limit the absorption of humidity of the baked products 22 during cooling.

In accordance with embodiments described using figs. 2 to 8 and combinable with all the embodiments described here, the horizontal filling unit 21 includes a filling device with horizontal needles 51. In possible implementations, the filling device with horizontal needles 51 can be configured mobile with respect to the baked products 22 that are moved by the transport device 11 in the direction of feed F.

According to the embodiments described using figs. 2 to 8, the filling device with horizontal needles 51 can be provided to act frontally with respect to the baked products 22 advancing in the direction of feed F. In other words, the filling device with horizontal needles 51 can be configured to move counter-current with respect to the flow of baked products 22 moved in the direction of feed F.

In other embodiments, the filling device with horizontal needles 51 can be provided to act at the rear with respect to the baked products 22 advancing in the direction of feed F. In other words, the filling device with horizontal needles 51 can be configured to move in equicurrent with respect to the flow of baked products 22 advancing in the direction of feed F, that is, the device 51 follows the baked products 22.

Typically, the filling device with horizontal needles 51 can be mobile parallel to said direction of feed F. For example, this implementation can be used in the case of baked products 22 that are filled longitudinally, acting in the direction of feed F, for example in the case of elongated baked products 22 disposed longitudinally in the direction of feed F. In other implementations, the filling device with horizontal needles 51 can be mobile transversely to the direction of feed F. For example, this other implementation can be used in the case of baked products 22 that are filled longitudinally, acting transversely to the direction of feed F, for example in the case of elongated baked products 22 disposed transversely in the direction of feed F.

We must point out here that we maintain that the first implementation discussed above, in which the filling occurs essentially parallel to the direction of feed F, that is, with the filling device with horizontal needles 51 mobile parallel to the direction of feed F, has advantages with respect to the implementations in which the filling is carried out acting transversely to the direction of feed F. One advantage can be that, for example when the number of rows advancing is greater than two, it is possible to fill even the central rows, not just the side ones, since by acting frontally or at the rear with the filling device with horizontal needles 51 mobile parallel to said direction of feed F, it is possible to reach all the advancing baked products 22. Another possible advantage is that this solution allows to also fill baked products 22 removed from the baking trays 12, that is, extracted, and positioned free to advance, since the action of the filling device with horizontal needles 51 in the direction of feed F does not cause a misalignment with respect to this direction, keeping the flow ordered; at the most it might cause a parallel movement to the direction of feed F, which can advantageously be compensated with an alignment device, or equalizer 30, as will be described in more detail hereafter.

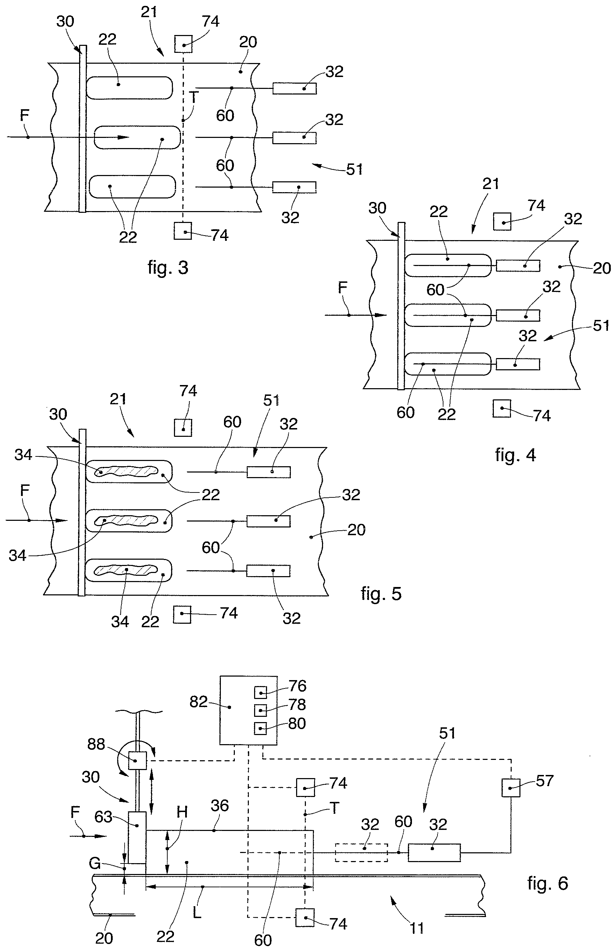

In possible implementations, the filling device with horizontal needles 51 can include a plurality of filling heads 32, each provided with a horizontal injection needle 60 that has a respective open delivery end (see figs. 3-8). In possible implementations, the horizontal injection needles 60 are disposed aligned parallel to the direction of feed F.

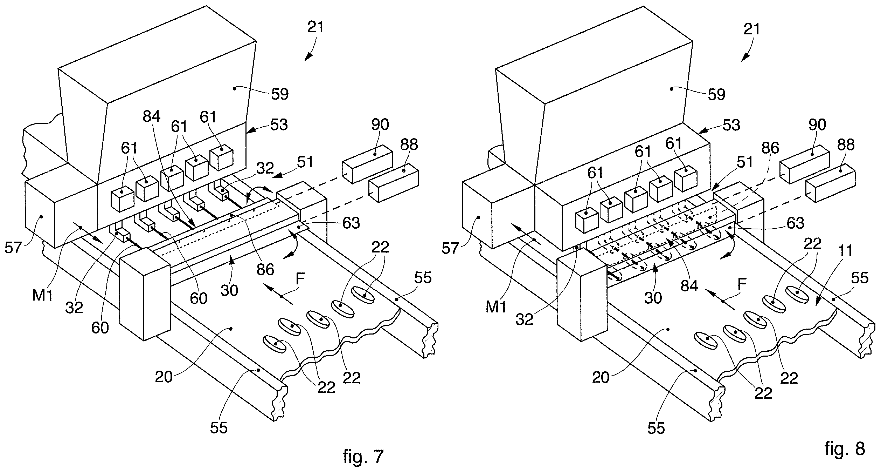

In accordance with embodiments described using figs. 7 and 8 and combinable with all the embodiments described here, the filling device with horizontal needles 51 can include a transport cart 53. The transport cart 53 is configured to support and move the filling heads 32, with the respective injection needles 60. The transport cart 53 can be disposed cantilevered on the transport device 11 and mobile in the direction of feed F, preferably with an alternate to-and-fro motion as indicated by the arrows M1 and M2 in figs. 7 and 8, in particular parallel to the direction of feed F. At the sides of the transport device 11, that is, of the direction of feed F, linear guides 55 can be provided, configured to guide the movement of the transport cart 53. A cart actuator 57 is provided, configured to move the transport cart 53.

Usually, an actuator, as used in association with embodiments described here, can be an actuator with an intrinsically linear movement or be configured to convert a circular movement into a linear movement. The conversion can be commonly done by means of types of mechanism selected from a group consisting of: screw actuators, such as a jack screw, ball screw actuators and roll screw actuators, or wheel and axle, for example drum, gears, pulley or shaft actuators, such as a lifting cable, a winch, a rack and a pinion group, a chain transmission, a belt transmission, actuators with a rigid chain and a rigid belt.

The cart actuator 57 can include a drive member, configured to move the transport cart 53, which is made to function as a source of energy, for example an electric current, a hydraulic fluid pressure or a pneumatic pressure.

A drive member as used in association with the embodiments described here can be a drive member chosen from a group comprising: an electric motor, a step electric motor, a magnetic motor, a linear axle with a motor, a linear motor, such as a mechanical linear motor, a piezoelectric linear motor, an electromagnetic linear motor, an electromechanical motor, an electromagnet, a gear motor, in particular a direct current gear motor. For example, motors can be provided that use electromagnetism and magnetic fields for interaction between a first part formed by electric coils and a second part formed by other electric coils, or by permanent or energized magnets or a conductor. In specific possible examples, the drive member can be configured as a linear motor, for example an induction linear motor, synchronous linear motor, brushless synchronous linear motor, homopolar linear motor, voice coil linear motor, tubular linear motor or also, as we said, a piezoelectric linear motor or an electromagnet. The use, for example, of a brushless motor allows a precise movement, constant and modifiable according to needs, of the transport cart 53 and therefore allows to accurately re-control the movement of the injection needles 60.

In possible implementations, a tank 59 is provided able to contain the filling 34 that is supplied to the injection needles 60. The transport cart 53 supports the tank 59. A plurality of distribution pumps 61 can also be provided on the transport cart 53. The distribution pumps 61 can receive the filling from the tank 59 and supply it to the filling heads 32 and to the respective injection needles 60.

Moreover, in embodiments described using figs. 3 to 8 and combinable with all the embodiments described here, the horizontal filling unit 21 can include an alignment device, or equalizer 30. The alignment device 30 can be provided to act as an abutment for the baked products 22 moved in the direction of feed F. Depending on whether the filling device with horizontal needles 51 is located at the front (see. Figs. 3-8) or at the rear of the baked products 22 that are fed on each occasion in the direction of feed F, the alignment device 30 can be located respectively at the rear (see figs. 3-8) or at the front.

In possible implementations, the alignment device 30 can include an alignment edge 63, able to act as an abutment or striker, to align the baked products 22. The alignment edge 63 is advantageously configured mobile, in order to be able to pass from a condition of interference, or engagement, with the row of baked products 22 fed on each occasion, to a condition of non-interference. In possible variants, the alignment device 30 includes a first actuator 88. The first actuator 88 can be connected to the alignment edge 63 in order to move it from a lowered position (condition of interference), in which it interacts with the baked products 22 to allow their alignment, and a raised position (condition of non-interference), in which it does not interfere with the normal advance of the baked products 22 in the direction of feed F.

Moreover, in embodiments described using figs. 7-8 and combinable with all the embodiments described here, the horizontal filling unit 21 can include a retaining device 84. The retaining device 84 can be configured to act selectively to retain the baked products 22 advancing in the direction of feed F. Depending on whether the filling device with horizontal needles 51 is located at the front (see figs. 7-8) or at the back of the baked products 22 advancing on each occasion in the direction of feed F, the retaining device 84 can be located respectively at the front (see figs. 7-8) or at the back. In possible implementations, the retaining device 84 can include a retaining edge 86 able to act as a clamp, in order not to draw the baked products 22 during the step in which the injection needles 60 are removed from inside them. The retaining edge 86 can be configured mobile to be able to pass from a retaining or engaging condition, with the array of baked products 22 fed on each occasion to a condition of release. The retaining edge 86 can be provided with apertures for the passage of the injection needles 60.

Advantageously, some or all of the elements of the apparatus 10 used for alignment, retaining and/or filling can be configured to be substituted rapidly to adapt to a new baked product 22, of varied shape and/or sizes, that passes along the apparatus 10 (format change). In particular, the alignment device 30, the retaining device 84 and/or the injection needles 60 can be replaced simply and quickly by others with different shapes and/or sizes, to adapt to a possible format change of the baked products 22.

In possible variants, the retaining device 84 includes a second actuator 90. The second actuator 90 is connected to the alignment edge 86 in order to move it between a lowered position (retaining condition), in which it interacts with the baked products 22 and allows them to be retained, and a raised position (release condition), in which it interferes with the normal advance of the baked products 22 in the direction of feed F.

Both the actuators 88, 90 mentioned above can be configured to supply a movement, in particular a rotation, the direction of which can be inverted.

In some variants a single actuator 88, 90 can be provided in order to move both the alignment edge 63 and the retaining edge 86 in coordination.

For example, in some variants, the actuators 88, 90 can be made as described before with reference to the cart actuator 57.

In accordance with embodiments described using fig. 6 and combinable with all the embodiments described here, the apparatus 10 includes a control unit, or system controller 82. The control unit 82 can comprise a central processing unit, or CPU 76, an electronic memory 78, an electronic data bank 80 and auxiliary circuits (or I/O) (not shown).

For example the CPU can be any type of processor for computers usable in the computer and/or automation field, for example for the actuation and movement of products, devices or tools. The memory can be connected to the CPU and can be one or more of those commercially available, such as a random access memory (RAM), a read only memory (ROM), floppy disc, hard disc, mass memory, or any other form of digital archive, either remote or local. The software instructions and the data can for example be encoded and memorized in the memory to command the CPU. The auxiliary circuits can also be connected to the CPU to help the processor in a conventional manner. The auxiliary circuits can include for example at least one of either: cache circuits, feed circuits, clock circuits, input/output circuits, subsystems and suchlike. A program (or computer instructions) readable by the control unit 82 can determine which tasks can be done according to the method of the present description. In some embodiments, the program is a software readable by the control unit 82. The control unit 82 includes a code to generate and memorize information and data introduced or generated during the course of the method according to the present description.

According to possible embodiments, the control unit 82 is advantageously configured to act in coordination on the first actuator 88 of the alignment edge 63 and on the second actuator 90 of the retaining edge 86, allowing to alternate the steps of retaining the baked products 22 and the release step.

In accordance with variants, the transport member 20 used to transport the baked products 22 along the horizontal filling unit 21 can be configured to advance step-wise, with a step having a length equal to the distance between two consecutive rows of baked products 22.

In accordance with possible embodiments, combinable with all the embodiments described here, the horizontal filling unit 21 can include one or more position detection sensors 74 (see for example figs. 3-6). The one or more position detection sensors 74 can be connected to communicate with the control unit 82. One or more position detection sensors 74 can in particular be positioned aligned transversely at the side of the transport member 20, in correspondence to the horizontal filling unit 21, to detect the passage of the baked products 22 and supply a respective signal to the control unit 82. In this way, the one or more position detection sensors 74 can define a virtual line to be controlled T, through which the baked products 22 pass when they pass through the horizontal filling unit 21. The position detection sensors 74 can be preferably positioned in a space comprised between the alignment unit 30 and the injection needles 60, in order to detect the passage of the baked products 22 that are transported by the transport member 20 and supply a corresponding signal to the control unit 82. In possible implementations, two position detection sensors 74 can be provided, disposed on one side and the other of the transport member 20 (see for example figs. 3-6). Examples of position detection sensors 74 can be presence sensors. Possible sensors of proximity or presence can be for example of the inductive, capacitive, magnetic, ultrasound or optical type. For example, a presence or proximity sensor of the optical type can be used, such as a photoelectric sensor or photocell. A sensor to take photographs/videos can also be used (camera/TV camera).

In accordance with some variants described using fig. 2, downstream of the horizontal filling unit 21 in the direction of feed F, a cooling unit 48 can be provided to cool the filling 34 that has been injected into the baked products 22.

In accordance with some variants, downstream of the cooling unit 48 in the direction of feed F, an overturning device 62 can be provided. The overturning device 62 can be configured to overturn the baked products 22, so that at entrance they have the upper or flat surface 36 in contact with the surface identified by the movement plane P of the transport member 20 and at exit, on the other hand, they have the lower surface, or base, in contact with the surface identified by the movement plane P of the transport member 20. This maneuver is particularly useful if it is carried out when, during the production of the baked products 22, there is a step to decorate them, since the decoration 40 usually needs to be deposited from above.

For example, the overturning device 62 can have an arm, a sucker, a belt, rolls, needles and in any case of any known type.

According to some variants, downstream of the overturning device 62 in the direction of feed F, a unit 52 can be provided to deliver the decoration. The decoration delivery unit 52 can be configured to possibly deposit a decoration 40 on the upper surface 36 of the baked product 22. The decoration delivery unit 52 can be provided with decoration delivery members 38 which are provided to deposit a suitable and predetermined quantity of decoration 40 contained inside suitable tanks (not shown in the drawings). The decoration 40 can be deposited using the suitable decoration delivery members 38, such as for example a dropper, advantageously disposed above the baked products 22 to be decorated.

According to some variants, downstream of the decoration delivery unit 52 in the direction of feed F, a cooling unit 48 can be provided, to cool or essentially solidify the decoration 40 that has been deposited on the baked products 22.

According to some possible embodiments, downstream of the cooling unit 48, in the direction of feed F, a system can be provided to abate the microbial load, micro-organisms, spores, molds or other contaminants, to which the baked products 22 are fed by means of a transport member 20 of the type described above. For example, the abatement systems can include UV lamps 28. The UV lamps 28 are provided to subject the baked products 22 to irradiation, with a predetermined time, intensity and wave length, with ultraviolet rays, to eliminate possible spores, bacteria or micro-organisms present on the baked products 22. Alternatively, or additionally, the abatement system can include irradiation devices with ionizing radiations, irradiation devices with pulsed light, irradiation devices with pulsed X rays, treatment devices with electric fields or pulsed electric fields, cold plasma treatment devices, or ozone treatment devices.

According to possible embodiments, downstream of the abatement system, in the direction of feed F, a product packaging unit 54 is provided, which the baked products 22 reach by means of a transport member 20 of the type described above.

According to some variants, contained inside the product packaging unit 54 a "clean chamber" 44 can be provided, to pack the baked products 22 individually in an uncontaminated environment, using packages 56 of a suitable size to contain them. For example it may be provided to automatically feed a packaging machine of the flow-pack type.

By "clean chamber" we mean a conditioned zone where the air is controlled and the contamination is limited, in order to obtain ideal hygienic conditions for packaging the baked products 22, i.e. very pure air, with an extremely low content of micro particles of suspended dust. The advantage of providing this zone is that the organoleptic characteristics of the baked products 22 can be maintained unchanged for as long as possible inside the packages 56. The packages 56 containing the baked products 22 individually packaged can then be put in multiple packages, such as bags, envelopes or boxes, made of plastic material, paper or suchlike, transparent or non-transparent to sunlight, and in any case of a type known in the field of packaging baked products 22.

Finally, the packages 56 thus obtained can be conveyed by a transport member 20 to an exit zone 64, located downstream of the packaging unit 54 in the direction of feed F.

According to embodiments described using fig. 2, and combinable with all the embodiments described here, the production of baked products 22 begins by dropping batter dough 16 using the delivery nozzles 14 of the unit to deliver and measure the batter dough 13 inside the baking trays 12. The batter dough 16 thus deposited accumulates in a measured quantity inside the hollows of the baking trays 12.

According to the variants described here, after this step a step is provided to cook the batter dough 16 disposed in the baking trays 12, which are introduced by the transport member 20 inside the oven 18. The cooking step can be obtained for example using an oven 18 of the electric type.

Once cooking is complete, by means of transport members 20 at exit from the oven 18, the baking trays 12, which contain the baked products 22 just out of the oven and are typically at a temperature of around 100°C, can be fed on the movement plane P by the transport member 20. Advantageously, immediately after exiting from the cooking device 15, the baked products 22 pass through the first cooling sector 23. This step can be provided for an initial cooling of the baked products 22 that is not abrupt, i.e. it has a moderate heat gradient, so as not to alter the organoleptic properties of the baked products 22 and to keep the correct humidity. This first cooling, which is as we said a first "soft" cooling, in air, is advantageous because it allows easy and precise detachment and removal of the cooked baked products 22 from the baking trays 12.

According to one embodiment of the present invention, the time provided for a first cooling of the baked products 22 exiting from the oven 18 can be comprised between four and six minutes, in particular for example about five minutes. During this period of time, the temperature of the baked products 22 can go down for example from about 100°C to about 60°C. When a suitable temperature has been obtained at the end of the feed, the baking trays 12 containing the baked products 22 are received by the product extraction unit 17, which provides to remove the baked products 22 from the respective baking trays 12. This detachment of the baked products 22, which as we said is facilitated by the first cooling of the cooked baked products 22, can be obtained for example by a device that provides to selectively retain the baking trays 12 and to make them perform a rotation by an angle of about 180°, so as to overturn the baking trays 12. This operation therefore takes place preferably at temperatures of the baked products 22 that are suitable for an easy removal thereof, for example near to or around about 60°C. In this way the baked products 22 are detached from their baking trays 12, and therefore the baked products 22 will be arranged in orderly rows, resting on the movement plane P of the transport member 20 by their upper surface 36, while the lower surface will be facing upward.

Once the baked products 22 have been detached from the baking trays 12, they continue toward the cooling unit 19, in which the temperature of the baked products 22 is lowered further, for example from about 60°C to about 30°C. this further or second cooling, which as we said is a "forced" cooling, is advantageous because it allows to take the baked products 22 to a temperature, in particular a temperature of the inner core, compatible with receiving the filling. Generally, the cooling is such that the inside of the baked products 22, where the filling 34 will be introduced, is also correctly cooled to the desired temperature, not only the outside. The refrigerators 26 are used in the cooling step, with the advantage of reducing to a minimum the humidity absorbed by the baked products 22.

According to some variants, at exit from the cooling unit 19 the transport member 20 transfers the baked products 22 just cooled toward the horizontal filling unit 21 disposed downstream in the direction of feed F.

Figs. 3-8 are used to describe in sequence the functioning of the horizontal filling unit 21 according to a filling method of the present description. It is described in operation, i.e. with the transport member 20 driven normally to feed the baked products 22 in the direction of feed F.

According to one embodiment, the baked products 22 reach the horizontal filling unit 21 organized in substantially orderly rows, having their upper surface 36 resting on the movement plane P of the transport member 20 and having one of the lateral faces, preferably the narrowest, substantially belonging to a plane perpendicular to the one identified by the movement plane P of the baked products 22 (see fig. 3).

Proceeding along the direction of feed F, the baked products 22, or at least the most advanced of the corresponding row, pass beyond the virtual line T identified by the position detection sensors 74, causing a passage signal to be sent to the control unit 82. The control unit 82 then commands the momentary stoppage of the transport member 20 and drives the first actuator 88 and the second actuator 90, which cause both the alignment device 30 and the retaining device 84 to pass from the inactive position to the activation position, and therefore cause both the alignment edge 63 and the retaining edge 86 to be lowered (see figs. 7, 8).

Consequently, the control unit 82 also drives the transport cart 53 by means of the actuator cart 57; the transport cart 53 moves parallel to the direction of feed F, but in the opposite sense, as identified by arrow M1. The movement of the transport cart 53 is constrained to be parallel to the direction of feed F thanks to its cooperation with the linear guides 55. The movement of the transport cart 53 also determines the movement of the needle-type filling device 51. The feed of the needle-type filling device 51 toward the baked products 22 takes the injection needles 60 into contact with the baked products 22, which are inserted for the filling operation. Initially, the effect of the injection needles 60 on the baked products 22, which contrast the action of the injection needles 60 as much as possible, is therefore to thrust the baked products 22 toward the alignment edge 63. Consequently, when all the baked products 22 have been thrust toward the alignment edge 63, an equalized and aligned effect is obtained. At this point, continuing their advance, the injection needles 60 overcome the resistance to penetration of the baked products 22 and therefore begin to enter inside (fig. 6). This step advantageously finishes a little before the injection needles 60 have reached the opposite end from where they entered (see figs. 4 and 8). The alignment edge 63, when in the lowered position, has its lower end at a distance from the surface identified by the movement plane P equal to an interspace G. Preferably, the interspace G can be less than the minimum height H of one baked product 22 (fig. 6).

When the injection needles 60 have reached their end-of-travel inside the baked products 22, the control unit 82 drives the inversion of travel of the actuator cart 57, which corresponds to a movement of the needle-type filling device 51, concordant with the direction of feed F and the sense indicated by arrow M2 (fig. 8). Subsequently, when the injection needles 60 begin to exit from the baked products 22, the control unit 82 drives the first actuator 88, which causes the alignment device 30 to pass from the activation position to the inactive position, and therefore causes the alignment edge 63 to be lifted.

Preferably, in this exit step, the retaining edge 86 prevents the injection needles 60 from drawing the baked products 22 with them. The retaining edge 86 too, when in the lowered position, has its lower end at a distance from the surface identified by the movement plane P, less than the minimum height H of one baked product 22. The retaining edge 86 therefore allows to obtain an equalized and aligned effect also at the front.

Advantageously, when the injection needles begin their return travel, which will end with their exit from the baked products 22, the delivery of the filling 34 is started, which lasts for the whole return travel of the injection needles 60, for as long as their open delivery end is inside the baked products 22. In particular, during the return travel, the filling 34 contained inside the tank 59 is thrust in a pre-measured quantity by the distribution pumps 61, first through the filling heads 32 and then through the injection needles 60, to be introduced through the open delivery end thereof inside the baked products 22. The introduction can be carried out by means of a continuous, substantially continuous or also intermittent release of a certain predetermined quantity of filling 34 during the exit of the injection needles 60 from the baked products 22, to make a homogeneous filling (fig. 5). Preferably, the filling distance traveled by the injection needles 60 inside the baked products 22 can be established in advance and therefore less than a length L of the baked product 22.

In possible implementations, the administration of the filling 34 ends before the injection needles 60 exit from the baked products 22 (fig. 5). In this way, the baked product or its package is not dirtied, even laterally.

Filling the baked product horizontally through the lateral surface, not from above, can be particularly advantageous in that possible deposits of filling 34 that might emerge from the hole made by the injection needles 60 in any case do not come into contact with the transport member 20, preventing the disadvantages connected to the dirtying of the latter.

When the injection needles 60 have completely come out from the baked products 22, the control unit 82 drives the second actuator 90 which causes the retaining device 84 to pass from the activation position to the inactive position, and therefore allows the retaining edge 86 to be lifted.

Finally, the control unit 82 commands the re-activation of the transport member 20 in concordance with the direction of feed F, to make the baked products 22 thus filled continue toward the cooling unit 48 to cool the filling 34 just inserted, at the same time making the subsequent row of baked products 22 to be filled arrive (fig. 8).

In possible variants, it is possible for example to provide an inverted disposition of the needle-type filling device 51 and alignment device 30 and retaining device 84, compared with the disposition described heretofore, without departing from the field of protection of the present invention.

According to a possible embodiment, usable if an upper decoration is provided for the baked products 22, downstream of the cooling unit 48 the baked products 22 can be turned over by 180° by the overturning device 62 so that they have their flat surface 36 facing upward, and subsequently transported in correspondence with a decoration delivery unit 52 which is provided to make the decoration by depositing the decoration 40. The decoration 40 is delivered by the decoration delivery members 38 onto the flat surface 36 of the baked products 22.

When the decorating is finished, the baked products 22 can be subjected to solidification of the decoration 40 by the cooling unit 48. Subsequently, possible spores or bacteria or micro-organisms in general are eliminated by the abatement system, for example using UV lamps 28, and the baked products 22 are finally packaged by the packaging unit 54 in the appropriate packages 56.

Preferably, the control unit 82 can be configured to impart constant or variable speeds and/or accelerations to the transport members 20, to adapt to the various steps of the production and filling of the baked products 22.

Some embodiments can provide the execution of various steps, passages and operations, as described above. The steps, passages and operations can be done with instructions performed by a machine which cause the execution of certain steps by a general-purpose or special-purpose processor. Alternatively, these steps, passages and operations can be performed by specific hardware components that contain hardware logic to perform the steps, or by any combination of components for programmed computers and personalized hardware components.

Embodiments of the method in accordance with the present description can be included in a program for computers that can be memorized in a computer-readable mean that includes the instructions that, once performed by the apparatus 10, determine the execution of the method discussed here.

In particular, elements according to the present invention can be given as machine-readable means to memorize the instructions which can be carried out by the machine. The machine-readable means can include, without being limited to, floppy disks, optical disks, CD-ROM, optical-magnetic disks, ROM, RAM, EPROM, EEPROM, optical or magnetic cards, propagation means or other types of machine-readable means suitable to memorize electronic information. For example, the present invention can be downloaded as a computer program that can be transferred from a remote computer (for example a server) to a requesting computer (for example a client), by means of data signals received with carrier waves or other propagation means, via a communication connection (for example a modem or a network connection).

It is clear that modifications and/or additions of parts may be made to the apparatus 10 as described heretofore, without departing from the field and scope of the present invention.

It is also clear that, although the present invention has been described with reference to some specific examples, a person of skill in the art shall certainly be able to achieve many other equivalent forms of the apparatus, having the characteristics as set forth in the claims and hence all coming within the field of protection defined thereby.

Although the above refers to embodiments of the invention, other embodiments can be provided without departing from the main field of protection, which is defined by the following claims.

In the following claims, the sole purpose of the references in brackets is to facilitate reading: they must not be considered as restrictive factors with regard to the field of protection claimed in the specific claims.

## Claims

1. Apparatus for the production and filling of filled baked products made with batter dough, **characterized in that** said apparatus comprises:
- a transport device (11) configured to define a movement plane (P) for the movement, in a direction of feed (F), of baked products (22) or one or more baking trays (12) each provided with cooking hollows to receive a measured quantity of batter dough;
- a unit to deliver and measure the batter dough (13) configured to deliver a batter dough into said hollows of said baking trays (12);
- a first cooling sector (23) configured to cool the baked products (22) contained in the hollows of the baking trays (12), wherein said first cooling sector (23) is an in-air cooling sector;
- a product extraction unit (17) configured to remove the cooked baked products (22) from the baking trays (12) and deposit them in organized rows on said transport device (11);
- a cooling unit (19) configured to carry out a second cooling of the baked products (22) removed from the baking trays (12), wherein said cooling unit (19) is a forced cooling unit and comprises a refrigerator (26);
- a horizontal filling unit (21) configured to introduce a filling (34) inside the cooled baked products (22), essentially acting parallel to said movement plane (P).

2. Apparatus as in claim 1, wherein said horizontal filling unit (21) includes a filling device with horizontal needles (51).

3. Apparatus as in claim 2, wherein said filling device with horizontal needles (51) is configured mobile with respect to the baked products (22) that are made to move by the transport device (11) in the direction of feed (F).

4. Apparatus as in claim 2 or 3, wherein said filling device with horizontal needles (51) comprises a plurality of filling heads (32), each provided with a horizontal injection needle (60), disposed aligned parallel to said direction of feed (F).

5. Apparatus as in claim 4, wherein said filling device with horizontal needles (51) comprises a transport cart (53) configured to support and move said filling heads (32) and the respective injection needles (60).

6. Apparatus as in claim 5, wherein said transport cart (53) is disposed cantilevered on the transport device (11) and mobile in said direction of feed (F).

7. Apparatus as in claim 5 or 6, wherein said filling device with horizontal needles (51) comprises a tank (59), supported by the transport cart (53) and able to contain the filling (34) to be supplied to the injection needles (60), distribution pumps (61) being provided on said transport cart (53) to receive the filling (34) from the tank (59) and supply it to the filling heads (32) and to the respective injection needles (60).

8. Apparatus as in any claim from 1 to 7, wherein said horizontal filling unit (21) comprises an alignment device (30), to function as an abutment for the baked products (22) moved in the direction of feed (F).

9. Apparatus as in claim 8, wherein said alignment device (30) comprises an alignment edge (63), able to function as an abutment to align the baked products (22) and configured mobile, in order to be able to pass from a condition of interference, or engagement, with the baked products (22) that are fed on each occasion, to a condition of non-interference, a first actuator (88) being connected to the alignment edge (63) to move it between the condition of interference and the condition of non-interference.

10. Apparatus as in any claim from 1 to 9, wherein said horizontal filling unit (21) comprises a retaining device (84) configured to selectively retain the baked products (22) moved in the direction of feed (F).

11. Apparatus as in claim 10, wherein said retaining device (84) comprises a retaining edge (86) able to retain the baked products (22) when the injection needles (60) are removed from inside them, said retaining edge (86) being configured mobile to be able to pass from a retaining condition with the array of baked products (22) fed on each occasion, to a release condition, a second actuator (90) being provided, connected to the retaining edge (86) to move it between the retaining condition and the release condition.

12. Apparatus as in any of the claims from 1 to 11, wherein said apparatus comprises a control unit (82).

13. Apparatus as in claim 12, wherein said horizontal filling unit (21) comprises one or more position detector sensors (74) connected to communicate with said control unit (82).

14. Apparatus as in any of the claims from 1 to 13, wherein said product extraction unit (17) comprises an overturning device, configured to overturn the baking trays (12) through 180°.

15. Apparatus as in any of the claims from 1 to 14 wherein, downstream of the horizontal filling unit (21), in the direction of feed (F), said apparatus comprises a cooling unit (48) provided to cool the filling (34) injected into the baked products (22), an overturning device (62) to turn the baked products (22) over, and a subsequent decoration unit (52) to deliver a decoration (40), and another cooling unit (48) provided to cool the decoration (40) that has been deposited on the baked products (22).

16. Apparatus as in any of the claims from 1 to 15, wherein said apparatus comprises a system to abate the microbial load, micro-organisms, spores, mold or other contaminants.

17. Apparatus as in any of the claims from 1 to 16, wherein said apparatus comprises a unit to pack the products (54).

18. Apparatus as in any of the claims from 1 to 17, wherein said apparatus comprises a cooking device (15) configured to receive the baking trays (12) and to cook the batter dough contained therein, disposed between the unit to deliver and measure the batter dough (13) and the product extraction unit (17).

19. Apparatus as in any of the claims from 1 to 18, wherein said first cooling sector (23) is disposed upstream of the product extraction unit (17) in the direction of feed (F).

20. Apparatus as in claims 18 and 19, wherein said first cooling sector (23) is disposed downstream of the cooking device (15) in the direction of feed (F).

21. Apparatus as in any of the claims from 1 to 20, wherein said first cooling sector (23) is configured to cool the baked products (22) to about 55°-65°C.

22. Apparatus as in any of the claims from 1 to 21, wherein said first cooling sector (23) is configured to cool the baked products (22) within about four to six minutes.

23. Apparatus as in any of the claims from 1 to 22, wherein the cooling unit (19) is configured to carry out the second cooling of the baked products (22) to about 25°-35°.

24. Method to produce and fill filled baked products made with a batter dough, **characterized in that** said method comprises:
- moving baking trays (12) on a movement plane (P) in a direction of feed (F), each provided with cooking hollows to receive a measured quantity of batter dough;
- delivering a batter dough into said hollows of said baking trays (12);
- cooking the batter dough contained in the hollows of the baking trays (12);
- carrying out a first in-air cooling of the cooked baked products (22) contained in the hollows of the baking trays (12);
- removing the baked products (22), cooked and subjected to the first cooling, from the baking trays (12) and depositing them in organized rows on a transport device (11);
- moving the baked products (22) removed from the baking trays (12) on the movement plane (P) in the direction of feed (F);
- carrying out a second forced cooling of the baked products (22) by means of a refrigerator (26);
- a horizontal filling step that provides to introduce a filling (34) inside the cooled baked products (22), acting essentially parallel to said movement plane (P).

25. Method as in claim 24, wherein said first cooling is carried out before the cooked baked products (22) are removed from the baking trays (12).

26. Method as in claim 24 or 25, wherein said first cooling is carried out immediately after the cooking of the batter dough in the hollows of the baking trays (12).

27. Method as in any of the claims from 24 to 26, wherein said first cooling cools the cooked baked products (22) to about 55°-65°.

28. Method as in any of the claims from 24 to 27, wherein said first cooling cools the cooked baked products (22) in about four to six minutes.

29. Method as in any of the claims from 24 to 28, wherein the second cooling cools the baked products (22) to about 25°-35°.

30. Method as in any of the claims from 24 to 29, wherein the horizontal filling step is carried out in a direction essentially parallel to the direction of feed (F).

## Patentansprüche

1. Vorrichtung zur Herstellung und Füllung von gefüllten Backprodukten, die mit Backteig hergestellt werden, **dadurch gekennzeichnet, dass** die Vorrichtung aufweist:
- eine Transportvorrichtung (11), die konfiguriert ist, um eine Bewegungsebene (P) für die Bewegung, in eine Zuführrichtung (F), von Backprodukten (22) oder von einem oder mehreren Backblechen (12), die jeweils mit Backvertiefungen versehen sind, um eine abgemessene Menge an Backteig aufzunehmen, zu definieren,
- eine Einheit zum Zuführen und Abmessen des Backteigs (13), die konfiguriert ist, um einen Backteig in die Hohlräume der Backbleche (12) zuzuführen,
- einen ersten Kühlabschnitt (23), der konfiguriert ist, um die in den Hohlräumen der Backbleche (12) enthaltenen Backprodukte (22) zu kühlen, wobei der erste Kühlabschnitt (23) ein In-Luft-Kühlabschnitt ist,
- eine Produktextraktionseinheit (17), die konfiguriert ist, um die gebackenen Backprodukte (22) von den Backblechen (12) zu entnehmen und sie in organisierten Reihen auf der Transportvorrichtung (11) abzulegen,
- eine Kühleinheit (19), die konfiguriert ist, um ein zweites Kühlen der von den Backblechen (12) entnommenen Backprodukte (22) durchzuführen, wobei die Kühleinheit (19) eine Zwangskühleinheit ist und eine Kühleinrichtung (26) aufweist,
- eine Horizontalfülleinheit (21), die konfiguriert ist, um eine Füllung (34) in das Innere der gekühlten Backprodukte (22) einzuführen, die im Wesentlichen parallel zu der Bewegungsebene (P) wirkt.

2. Vorrichtung nach Anspruch 1, wobei die Horizontalfülleinheit (21) eine Füllvorrichtung mit horizontalen Nadeln (51) aufweist.

3. Vorrichtung nach Anspruch 2, wobei die Füllvorrichtung mit horizontalen Nadeln (51) in Bezug auf die Backprodukte (22), die durch die Transportvorrichtung (11) in die Zuführrichtung (F) bewegt werden, bewegbar konfiguriert ist.

4. Vorrichtung nach Anspruch 2 oder 3, wobei die Füllvorrichtung mit horizontalen Nadeln (51) eine Vielzahl von Füllköpfen (32) aufweist, von denen jeder mit einer Horizontalinjektionsnadel (60) versehen ist, die parallel zu der Zuführrichtung (F) ausgerichtet angeordnet ist.

5. Vorrichtung nach Anspruch 4, wobei die Füllvorrichtung mit horizontalen Nadeln (51) einen Transportwagen (53) aufweist, der konfiguriert ist, um die Füllköpfe (32) und die jeweiligen Injektionsnadeln (60) zu halten und zu bewegen.

6. Vorrichtung nach Anspruch 5, wobei der Transportwagen (53) frei auskragend an der Transportvorrichtung (11) angeordnet ist und in der Zuführrichtung (F) bewegbar ist.

7. Vorrichtung nach Anspruch 5 oder 6, wobei die Füllvorrichtung mit horizontalen Nadeln (51) einen Tank (59) aufweist, der von dem Transportwagen (53) gehalten wird und der imstande ist, die den Injektionsnadeln (60) zuzuführende Füllung (34) aufzunehmen, wobei auf dem Transportwagen (53) Verteilerpumpen (61) vorgesehen sind, um die Füllung (34) von dem Tank (59) zu erhalten und sie den Füllköpfen (32) und den jeweiligen Injektionsnadeln (60) zuzuführen.

8. Vorrichtung nach einem der Ansprüche 1 bis 7, wobei die Horizontalfülleinheit (21) eine Ausrichtungsvorrichtung (30) aufweist, um als ein Anschlag für die in Zuführrichtung (F) bewegten Backprodukte (22) zu fungieren.

9. Vorrichtung nach Anspruch 8, wobei die Ausrichtungsvorrichtung (30) einen Ausrichtrand (63) aufweist, der imstande ist, als ein Anschlag zum Ausrichten der Backprodukte (22) zu fungieren, und der bewegbar konfiguriert ist, um imstande zu sein, von einem Zustand des Ineinander-Eingreifens, oder des Eingriffs, mit den Backprodukten (22), die jedes Mal zugeführt werden, in einen Zustand des Nicht-Ineinander-Eingreifens überzugehen, wobei ein erstes Betätigungselement (88) mit dem Ausrichtrand (63) verbunden ist, um diesen zwischen dem Zustand des Ineinander-Eingreifens und dem Zustand des Nicht-Ineinander-Eingreifens zu bewegen.

10. Vorrichtung nach einem der Ansprüche von 1 bis 9, wobei die Horizontalfülleinheit (21) eine Rückhaltevorrichtung (84) aufweist, die konfiguriert ist, um die in Zuführrichtung (F) bewegten Backprodukte (22) selektiv zurückzuhalten.

11. Vorrichtung nach Anspruch 10, wobei die Rückhaltevorrichtung (84) einen Rückhalterand (86) aufweist, der imstande ist, die Backprodukte (22) zurückzuhalten, wenn die Injektionsnadeln (60) aus deren Innerem entfernt werden, wobei der Rückhalterand (86) bewegbar konfiguriert ist, um imstande zu sein, von einem Rückhaltezustand mit der Anordnung von Backprodukten (22), die bei jeder Gelegenheit zugeführt werden, in einen Freigabezustand überzugehen, wobei ein zweites Betätigungselement (90) vorgesehen ist, das mit dem Rückhalterand (86) verbunden ist, um diesen zwischen dem Rückhaltezustand und dem Freigabezustand zu bewegen.

12. Vorrichtung nach einem der Ansprüche von 1 bis 11, wobei die Vorrichtung eine Steuereinheit (82) aufweist.

13. Vorrichtung nach Anspruch 12, wobei die Horizontalfülleinheit (21) einen oder mehrere Positionserfassungssensoren (74) aufweist, die angeschlossen sind, um mit der Steuereinheit (82) zu kommunizieren.

14. Vorrichtung nach einem der Ansprüche 1 bis 13, wobei die Produktextraktionseinheit (17) eine Umdrehvorrichtung aufweist, die konfiguriert ist, um die Backbleche (12) um 180° umzudrehen.

15. Vorrichtung nach einem der Ansprüche 1 bis 14, wobei die Vorrichtung stromabwärts der Horizontalfülleinheit (21), in Zuführrichtung (F), aufweist eine Kühleinheit (48), die zum Kühlen der in die Backprodukte (22) eingespritzten Füllung (34) vorgesehen ist, eine Umdrehvorrichtung (62), um die Backprodukte (22) umzudrehen, und eine anschließende Dekorationseinheit (52), um eine Dekoration (40) zuzuführen, und eine weitere Kühleinheit (48), die zum Kühlen der Dekoration (40) vorgesehen ist, die auf den Backprodukten (22) abgelagert worden ist.

16. Vorrichtung nach einem der Ansprüche 1 bis 15, wobei die Vorrichtung ein System zur Verminderung von mikrobieller Belastung, von Mikroorganismen, von Sporen, von Schimmel oder von anderen Verunreinigungen aufweist.

17. Vorrichtung nach einem der Ansprüche 1 bis 16, wobei die Vorrichtung eine Einheit zum Verpacken der Produkte (54) aufweist.

18. Vorrichtung nach einem der Ansprüche 1 bis 17, wobei die Vorrichtung eine Backvorrichtung (15) aufweist, die konfiguriert ist, um die Backbleche (12) aufzunehmen und den darin enthaltenen Backteig zu backen, und die zwischen der Einheit zum Zuführen und Abmessen des Backteigs (13) und der Produktextraktionseinheit (17) angeordnet ist.

19. Vorrichtung nach einem der Ansprüche 1 bis 18, wobei der erste Kühlabschnitt (23) stromaufwärts der Produktextraktionseinheit (17) in Zuführrichtung (F) angeordnet ist.

20. Vorrichtung nach den Ansprüchen 18 und 19, wobei der erste Kühlabschnitt (23) in Zuführrichtung (F) stromabwärts von der Backvorrichtung (15) angeordnet ist.

21. Vorrichtung nach einem der Ansprüche 1 bis 20, wobei der erste Kühlabschnitt (23) konfiguriert ist, um die Backprodukte (22) auf etwa 55°-65°C zu kühlen.

22. Vorrichtung nach einem der Ansprüche von 1 bis 21, wobei der erste Kühlabschnitt (23) konfiguriert ist, um die Backprodukte (22) innerhalb von etwa vier bis sechs Minuten abzukühlen.

23. Vorrichtung nach einem der Ansprüche 1 bis 22, wobei die Kühleinheit (19) konfiguriert ist, um die zweite Abkühlung der Backprodukte (22) auf etwa 25°-35° durchzuführen.

24. Verfahren zur Herstellung und Füllung gefüllter Backprodukte, die mit einem Backteig hergestellt werden, **dadurch gekennzeichnet, dass** das Verfahren aufweist:
- Bewegen von Backblechen (12) auf einer Bewegungsebene (P) in einer Zuführrichtung (F), wobei jedes mit Backhohlräumen versehen ist, um eine abgemessene Menge an Backteig aufzunehmen,
- Zuführen eines Backteigs in die Hohlräume der Backbleche (12),
- Backen des in den Hohlräumen der Backbleche (12) enthaltenen Backteigs,
- Durchführen einer ersten Luftkühlung der gebackenen Backprodukte (22), die in den Hohlräumen der Backbleche (12) enthalten sind,
- Entnehmen der Backprodukte (22), die gebacken und der ersten Kühlung unterzogen wurden, aus den Backblechen (12) und sie Ablegen in organisierten Reihen auf einer Transportvorrichtung (11),
- Bewegen der von den Backblechen (12) entnommenen Backprodukte (22) auf der Bewegungsebene (P) in Zuführrichtung (F),
- Durchführen einer zweiten Zwangskühlung der Backprodukte (22) mittels einer Kühlvorrichtung (26),
- einen Horizontalfüllschritt, der vorsieht, eine Füllung (34) in das Innere der abgekühlten Backprodukte (22) einzubringen, und der im Wesentlichen parallel zu der Bewegungsebene (P) wirkt.

25. Verfahren nach Anspruch 24, wobei die erste Kühlung durchgeführt wird, bevor die gebackenen Backprodukte (22) von den Backblechen (12) entfernt werden.

26. Verfahren nach Anspruch 24 oder 25, wobei das erste Kühlen unmittelbar nach dem Backen des Backteigs in den Hohlräumen der Backbleche (12) durchgeführt wird.

27. Verfahren nach einem der Ansprüche 24 bis 26, wobei die erste Kühlung die gebackenen Backprodukte (22) auf etwa 55°-65° abkühlt.

28. Verfahren nach einem der Ansprüche 24 bis 27, wobei das erste Abkühlen die gebackenen Backprodukte (22) in etwa vier bis sechs Minuten abkühlt.

29. Verfahren nach einem der Ansprüche 24 bis 28, wobei die zweite Kühlung die Backprodukte (22) auf etwa 25°-35° abkühlt.

30. Verfahren nach einem der Ansprüche 24 bis 29, wobei der Horizontalfüllschritt in einer Richtung im Wesentlichen parallel zur Zuführrichtung (F) durchgeführt wird.

## Revendications

1. Appareil pour la production et le fourrage de produits de boulangerie-pâtisserie fourrés à base de pâte liquide, **caractérisé en ce que** ledit appareil comprend :
- un dispositif de transport (11) configuré pour définir un plan de déplacement (P) pour le déplacement, dans une direction d'alimentation(F), de produits de boulangerie-pâtisserie (22) ou d'un ou plusieurs plateaux de cuisson (12) pourvus chacun de creux de cuisson pour recevoir une quantité mesurée de pâte liquide ;
- une unité pour délivrer et mesurer la pâte liquide (13) configurée pour délivrer une pâte liquide jusque dans lesdits creux desdits plateaux de cuisson (12) ;
- un premier secteur de refroidissement (23) configuré pour refroidir les produits cuits (22) contenus dans les creux des plateaux de cuisson (12), dans lequel ledit premier secteur de refroidissement (23) est un secteur de refroidissement à l'air ;
- une unité d'extraction de produit (17) configurée pour retirer les produits de boulangerie-pâtisserie cuits (22) à partir des plateaux de cuisson (12) et les déposer en rangées organisées sur ledit dispositif de transport (11) ;
- une unité de refroidissement (19) configurée pour effectuer un second refroidissement des produits de boulangerie-pâtisserie (22) retirés des plateaux de cuisson (12), dans lequel ladite unité de refroidissement (19) est une unité de refroidissement forcé et comprend un dispositif de réfrigération (26) ;
- une unité de fourrage horizontal (21) configurée pour introduire un fourrage (34) à l'intérieur des produits de boulangerie-pâtisserie refroidis (22), agissant essentiellement parallèlement audit plan de déplacement (P).

2. Appareil selon la revendication 1, dans lequel ladite unité de fourrage horizontal (21) comprend un dispositif de fourrage avec des aiguilles horizontales (51).

3. Appareil selon la revendication 2, dans lequel ledit dispositif de fourrage avec des aiguilles horizontales (51) est configuré mobile par rapport aux produits de boulangerie-pâtisserie (22) qui sont amenés à se déplacer par l'intermédiaire du dispositif de transport (11) dans la direction d'alimentation (F).

4. Appareil selon la revendication 2 ou 3, dans lequel ledit dispositif de fourrage avec des aiguilles horizontales (51) comprend une pluralité de têtes de fourrage(32), chacune pourvue d'une aiguille d'injection horizontale (60), disposées alignées parallèlement à ladite direction d'alimentation (F).

5. Appareil selon la revendication 4, dans lequel ledit dispositif de fourrage avec des aiguilles horizontales (51) comporte un chariot de transport (53) configuré pour supporter et déplacer lesdites têtes de fourrage (32) et les aiguilles d'injection respectives (60).

6. Appareil selon la revendication 5, dans lequel ledit chariot de transport (53) est disposé en porte-à-faux sur le dispositif de transport (11) et mobile dans ladite direction d'alimentation (F).

7. Appareil selon la revendication 5 ou 6, dans lequel ledit dispositif de fourrage avec des aiguilles horizontales (51) comprend un réservoir (59), supporté par le chariot de transport (53) et capable de contenir le fourrage (34) à fournir aux aiguilles d'injection (60), des pompes de distribution (61) étant prévues sur ledit chariot de transport (53) pour recevoir le fourrage (34) depuis le réservoir (59) et le fournir aux têtes de fourrage (32) et aux aiguilles d'injection respectives (60).

8. Appareil selon l'une quelconque des revendications 1 à 7, dans lequel ladite unité de fourrage horizontal (21) comprend un dispositif d'alignement (30), devant fonctionner comme une butée pour les produits de boulangerie-pâtisserie (22) déplacés dans la direction d'alimentation (F).

9. Appareil selon la revendication 8, dans lequel ledit dispositif d'alignement (30) comprend un bord d'alignement (63), capable de fonctionner comme une butée pour aligner les produits de boulangerie-pâtisserie (22) et configuré mobile, afin de pouvoir passer d'un état d'interférence, ou de coopération, avec les produits de boulangerie-pâtisserie (22) qui sont amenés à chaque occasion, à un état de non-interférence, un premier actionneur (88) étant connecté au bord d'alignement (63) pour le déplacer entre l'état d'interférence et l'état de non-interférence.

10. Appareil selon l'une quelconque des revendications 1 à 9, dans lequel ladite unité de fourrage horizontale (21) comprend un dispositif de retenue (84) configurés pour retenir sélectivement les produits de boulangerie-pâtisserie (22) déplacés dans la direction d'alimentation (F).

11. Appareil selon la revendication 10, dans lequel ledit dispositif de retenue (84) comprend un bord de retenue (86) capable de retenir les produits de boulangerie-pâtisserie (22) lorsque les aiguilles d'injection (60) sont retirées depuis l'intérieur de ceux-ci, ledit bord de retenue (86) étant configuré mobile pour pouvoir passer d'un état de retenue avec le groupe de produits de boulangerie-pâtisserie (22) alimentés à chaque occasion, à un état de libération, un second actionneur (90) étant prévu, connecté au bord de retenue (86) pour le déplacer entre l'état de retenue et l'état de libération.

12. Appareil selon l'une quelconque des revendications 1 à 11, dans lequel ledit appareil comprend une unité de commande (82).

13. Appareil selon la revendication 12, dans lequel ladite unité de fourrage horizontale (21) comprend un ou plusieurs capteurs de détection de position (74) connectés pour communiquer avec ladite unité de commande (82).

14. Appareil selon l'une quelconque des revendications 1 à 13, dans lequel ladite unité d'extraction de produit (17) comporte un dispositif de retournement, configuré pour retourner les plateaux de cuisson (12) sur 180°.

15. Appareil selon l'une quelconque des revendications 1 à 14, dans lequel, en aval de l'unité de fourrage horizontale (21), dans la direction d'alimentation (F), ledit appareil comprend une unité de refroidissement (48) prévue pour refroidir le fourrage (34) injecté dans les produits de boulangerie-pâtisserie (22), un dispositif de retournement (62) pour retourner les produits de boulangerie-pâtisserie (22), et une unité de décoration consécutive (52) pour délivrer une décoration (40), et une autre unité de refroidissement (48) prévue pour refroidir la décoration (40) qui a été déposée sur les produits de boulangerie-pâtisserie (22).

16. Appareil selon l'une quelconque des revendications 1 à 15, dans lequel ledit appareil comprend un système pour réduire la charge microbienne, les micro-organismes, les spores, la moisissure ou d'autres contaminants.

17. Appareil selon l'une quelconque des revendications 1 à 16, dans lequel ledit appareil comprend une unité pour conditionner les produits (54).

18. Appareil selon l'une quelconque des revendications 1 à 17, dans lequel ledit appareil comprend un dispositif de cuisson (15) configuré pour recevoir les plateaux de cuisson (12) et pour cuire la pâte liquide contenue en leur sein, disposé entre l'unité pour délivrer et mesurer la pâte liquide (13) et l'unité d'extraction du produit (17).

19. Appareil selon l'une quelconque des revendications 1 à 18, dans lequel ledit premier secteur de refroidissement (23) est disposé en amont de l'unité d'extraction de produit (17) dans la direction d'alimentation (F).

20. Appareil selon les revendications 18 et 19, dans lequel ledit premier secteur de refroidissement (23) est disposé en amont de l'unité d'extraction de produit (15) dans la direction d'alimentation (F).

21. Appareil selon l'une quelconque des revendications 1 à 20, dans lequel ledit premier secteur de refroidissement (23) est configuré pour refroidir les produits de boulangerie-pâtisserie cuits (22) jusqu'à environ 55°C à 65°C.

22. Appareil selon l'une quelconque des revendications 1 à 21, dans lequel ledit premier secteur de refroidissement (23) est configuré pour refroidir les produits de boulangerie-pâtisserie (22) en moins de quatre à six minutes.

23. Appareil selon l'une quelconque des revendications 1 à 22, dans lequel l'unité de refroidissement (19) est configurée pour effectuer le second refroidissement des produits de boulangerie-pâtisserie (22) jusqu'à environ 25°C à 35°C.

24. Procédé pour la production et le fourrage de produits de boulangerie-pâtisserie fourrés à base de pâte liquide, **caractérisé en ce que** ledit procédé comprend les étapes consistant à :
- déplacer des plateaux de cuisson (12) sur un plan de déplacement (P) dans une direction d'alimentation(F), pourvus chacun de creux de cuisson pour recevoir une quantité mesurée de pâte liquide ;
- délivrer une pâte liquide jusque dans lesdits creux desdits plateaux de cuisson (12) ;
- cuire la pâte liquide contenue dans les creux desdits plateaux de cuisson (12) ;
- effectuer un premier refroidissement à l'air des produits de boulangerie-pâtisserie (22) contenus dans les creux des plateaux de cuisson (12) ;
- pour retirer les produits de boulangerie-pâtisserie (22), cuits et soumis au premier refroidissement, à partir des plateaux de cuisson (12) et les déposer en rangées organisées sur un dispositif de transport (11) ;
- déplacer les produits de boulangerie-pâtisserie (22) retirés des plateaux de cuisson (12) sur le plan de déplacement (P) dans la direction d'alimentation (F) ;
- effectuer un second refroidissement forcé des produits de boulangerie-pâtisserie (22) par l'intermédiaire d'un dispositif de réfrigération (26) ;
- une étape de fourrage horizontal prévue pour introduire un fourrage (34) à l'intérieur des produits de boulangerie-pâtisserie refroidis (22), agissant essentiellement parallèlement audit plan de déplacement (P).

25. Procédé selon la revendication 24, dans lequel ledit premier refroidissement est effectué avant que les produits de boulangerie-pâtisserie cuits (22) ne soient retirés des plateaux de cuisson (12).

26. Procédé selon la revendication 24 ou 25, dans lequel ledit premier refroidissement est effectué immédiatement après la cuisson de la pâte liquide dans les creux des plateaux de cuisson (12).

27. Procédé selon l'une quelconque des revendications 24 à 26, dans lequel ledit premier refroidissement refroidit les produits de boulangerie-pâtisserie cuits (22) jusqu'à environ 55°C à 65°C.

28. Procédé selon l'une quelconque des revendications 24 à 27, dans lequel ledit premier refroidissement refroidit les produits de boulangerie-pâtisserie cuits (22) en moins de quatre à six minutes.

29. Procédé selon l'une quelconque des revendications 24 à 28, dans lequel ledit second refroidissement refroidit les produits de boulangerie-pâtisserie cuits (22) jusqu'à environ 25°C à 35°C.

30. Procédé selon l'une quelconque des revendications 24 à 29, dans lequel l'étape de fourrage horizontal est effectuée dans une direction essentiellement parallèle à la direction d'alimentation (F).
